# EUROPEAN PATENT APPLICATION

(11) **EP 4 365 980 A1**
(43) Date of publication of application: **08.05.2024**
(21) Application number: 23201970.3
(22) Date of filing: 05.10.2023
(51) Int. Cl.: H01M 4/134, H01M 4/36, H01M 4/38, H01M 4/58

(54) **SILICON OXIDE-BASED NEGATIVE ELECTRODE ACTIVE MATERIAL FOR SECONDARY BATTERY, METHOD OF PRODUCING THE SAME, AND NEGATIVE ELECTRODE FOR SECONDARY BATTERY INCLUDING THE SAME**

(30) Priority: 06.10.2022 KR 20220128147
(71) Applicant: SK On Co., Ltd., Seoul 03161 (KR); SK Innovation Co., Ltd., Seoul 03188 (KR)
(72) Inventor: PARK, Eun Jun, 34124 Daejeon (KR); SHIN, Sang Hye, 34124 Daejeon (KR); KIM, Nak Won, 34124 Daejeon (KR); MOON, Joon Hyung, 34124 Daejeon (KR); YUN, Jung Hyun, 34124 Daejeon (KR)
(74) Representative: Stolmár & Partner Patentanwälte PartG mbB

(57) **Abstract**

Provided are a silicon oxide-based negative electrode active material for a secondary battery, a method of producing the same, and a negative electrode for a secondary battery including the same. The present exemplary embodiment provides a negative electrode active material for a secondary battery including: a silicon oxide particle including a metal silicate; and a hydrocarbon coating layer on the silicon oxide particle, wherein a peak Pa is detected in 2880 cm⁻¹ to 2950 cm⁻¹ and a peak Pb is detected in 2800 cm⁻¹ to 2865 cm⁻¹ in FT-IR spectral analysis of the negative electrode active material. According to the exemplary embodiment, the hydrocarbon coating layer having a specific composition is prepared on the silicon oxide particle to prevent elution of residual metal in the silicon oxide particle to increase slurry stability, and in particular, even when the slurry is left for a long time, slurry gas emission may be significantly decreased to increase slurry stability.

## Description

### [Technical Field]

The following disclosure relates to a silicon oxide-based negative electrode active material for a secondary battery, a method of producing the same, and a negative electrode for a secondary battery including the same.

### [Background Art]

As an issue of global warming which is a problem in modern society arises, a demand for environmentally friendly technologies is rapidly increasing in response thereto. In particular, as a technical demand for electric vehicles and energy storage systems (ESS) increases, a demand for a lithium secondary battery in the spotlight as an energy storage device is also explosively increasing.

A conventional lithium secondary battery generally uses a carbon (C)-based negative electrode material such as natural graphite and artificial graphite, but the energy density of a battery using graphite is low due to the low theoretical capacity of graphite of about 372 mAh/g. In order to solve the problem, studies on a new negative electrode material for improving the low energy density are in progress.

As a solution for solving energy density, a silicon (Si)-based negative electrode material having a high theoretical capacity of about 3580 mAh/g is emerging. However, the silicon-based negative electrode material has poor battery life characteristics due to a large volume expansion (~400%) in the process of repeated charging and discharging.

As a method for solving the volume expansion issue of the silicon-based negative electrode material, a silicon oxide-based negative electrode material having a volume expansion rate lower than Si has been developed. The silicon oxide-based negative electrode material shows better life characteristics than the silicon-based negative electrode material, due to its low volume expansion rate. However, a battery to which the silicon oxide-based negative electrode material is applied has poor initial coulombic efficiency (ICE) due to the formation of an irreversible phase at the beginning of operation, and has poor industrial usability due to the poor initial efficiency.

In order to solve the problem, initial efficiency of a battery may be drastically improved by a process of pre-doping a silicon oxide-based negative electrode material with a metal, such as pre-lithiation, but the pH is increased by a large amount of residual metal having high activity produced during the metal doping treatment to cause deterioration of a binder in the production of an aqueous electrode, which makes electrode production difficult. In addition, residual lithium is continuously eluted in an aqueous slurry state and hydrogen gas is produced to cause a stability problem when the slurry is left for a long time, and also, a stored slurry is changed in viscosity over time to increase non-uniformity of the slurry, which may make uniform coating in electrode production difficult.

In order to remove the residual metal, a post-treatment technology using a high-concentration acid solution or a strong acid solution has been developed, but silicon oxides and various metal silicates included in a negative electrode active material are rather etched together by the post-treatment technology, which may cause a problem of deteriorating the capacity and the initial efficiency of a battery. In addition, though the residual metal may be temporarily removed by a high-concentration acid solution or a strong acid solution, the pH is increased again by residual metal which is continuously eluted when the slurry is left for a long time to cause a change in viscosity of the slurry over time, and thus, there is still a risk of deterioration of the physical properties of the slurry.

### [Disclosure]

### [Technical Problem]

An embodiment of the present disclosure is directed to solve problems such as gassing and a change in viscosity of a slurry over time, which occur in a silicon oxide-based negative electrode material which has undergone a metal pre-doping process such as a pre-lithiation process in order to improve initial efficiency, and in particular, to significantly improve slurry stability such as no change in viscosity of a slurry over time even when the slurry is left for a long time.

Another embodiment of the present disclosure is directed to effectively remove residual metal in the negative electrode active material formed by the metal doping process and decreasing damage to the negative electrode active material.

### [Technical Solution]

In one general aspect, a negative electrode active material for a secondary battery includes: a silicon oxide particle including a metal silicate; and a hydrocarbon coating layer on the silicon oxide particle, wherein a peak Pa is detected in 2880 cm⁻¹ to 2950 cm⁻¹ and a peak Pb is detected in 2800 cm⁻¹ to 2865 cm⁻¹ in FT-IR spectral analysis of the negative electrode active material.

The negative electrode active material for a secondary battery of an exemplary embodiment may have a Sb/Sa value of 0.7 or less, the Sb/Sa being a ratio of a peak area Sb in 2800 cm⁻¹ to 2865 cm⁻¹ to a peak area Sa in 2880 cm⁻¹ to 2950 cm⁻¹ in the FT-IR spectral analysis of the negative electrode active material.

In an exemplary embodiment, the Sb/Sa value may be 0.5 or less.

In an exemplary embodiment, the peak area Sa value may be 3.0 or less.

In an exemplary embodiment, the peak area Sb value may be 1.5 or less.

The negative electrode active material for a secondary battery of an exemplary embodiment may further have peaks Pc1 and Pc2 detected in 1520 cm⁻¹ to 1600 cm⁻¹ in the FT-IR spectral analysis of the negative electrode active material.

In an exemplary embodiment, the metal silicate may include a metal silicate of any one of Li, Na, Mg, and K.

In an exemplary embodiment, the metal silicate may include a lithium silicate represented by the following Chemical Formula 1:

[Chemical Formula 1] LiₓSi_{y}O_{z}

wherein 1≤x≤6, 1≤y≤4, and 0<z≤7.

In an exemplary embodiment, the hydrocarbon coating layer may include a straight-chain hydrocarbon organic acid having 8 or more carbon atoms or a derivative thereof.

In an exemplary embodiment, the straight-chain hydrocarbon organic acid may be a fatty acid.

In another general aspect, a method of producing a negative electrode active material for a secondary battery includes: a) preparing a silicon oxide particle including a metal silicate; and b) immersing the silicon oxide particle in an organic acid solution to prepare a hydrocarbon coating layer on the silicon oxide particle, thereby preparing a negative electrode active material.

In an exemplary embodiment, the metal silicate of the process a) may include a metal silicate of any one of Li, Na, Mg, and K.

In an exemplary embodiment, the organic acid of the process b) may include a straight-chain hydrocarbon organic acid having 8 or more carbon atoms.

In an exemplary embodiment, the straight-chain hydrocarbon organic acid may be a fatty acid.

In an exemplary embodiment, in the process (b), the hydrocarbon coating layer may be prepared by drying the organic acid-treated silicon oxide particle at 50 to 300°C.

In an exemplary embodiment, the process b) may include: b1) immersing the silicon oxide particle in an acid solution including an inorganic acid or an organic acid having 6 or fewer carbon atoms; and b2) immersing the product of the process b1) in an organic acid solution to prepare a hydrocarbon coating layer.

In an exemplary embodiment, a molar concentration of the acid solution of the process b1) may be 0.01 to 1.0 M.

In an exemplary embodiment, the molar concentration of the organic acid solution of the process b2) may be 0.01 to 0.5 M.

In another general aspect, a negative electrode for a secondary battery includes: the negative electrode active material of the exemplary embodiment described above.

The negative electrode of an exemplary embodiment may further include graphite.

In still another general aspect, a secondary battery includes the negative electrode of the exemplary embodiment described above.

Other features and aspects will be apparent from the following detailed description, the drawings, and the claims.

### [Brief Description of the Drawings]

FIG. 1 is the results of FT-IR analytical spectrum of the negative electrode active material of Example 2, ref., and Comparative Example 1, and oleic acid sample.
FIG. 2 is the results of FT-IR analytical spectrum of the negative electrode active material of Example 3, ref., and Comparative Example 2, and oleic acid sample.

### [Advantageous Effects]

According to the present exemplary embodiment, a negative electrode active material having a hydrocarbon coating layer having a specific composition prepared on a silicon oxide particle may be provided, the hydrocarbon coating layer may be prepared without damage to the silicon oxide particle and/or a metal silicate, elution of residual metal in the silicon oxide particle may be prevented to increase slurry stability, in particular, slurry gas emission may be significantly decreased and slurry stability may be increased even when the slurry is left for a long time, and additionally, volume expansion of the silicon oxide particle during charge and discharge of a battery may be suppressed.

According to the present exemplary embodiment, residual metal in the silicon oxide particle is removed and damage to the silicon oxide particle and/or the metal silicate may be significantly decreased by treating the silicon oxide particle including the metal silicate which has undergone a metal pre-doping process with an organic acid, specifically a long-chain hydrocarbon organic acid solution, and the hydrocarbon coating layer is provided to prevent further elution of residual metal in the silicon oxide particle, thereby significantly decreasing slurry gas emission even when the slurry is left for a long time and improving slurry stability. In addition, the hydrocarbon coating layer additionally has an effect of suppressing volume expansion of the silicon oxide particle during charge and discharge of a battery.

In a specific exemplary embodiment, when the silicon oxide particle is optionally pre-treated with a general acid solution in order to remove residual metal in the silicon oxide particle before preparing the hydrocarbon coating layer, and then the hydrocarbon coating layer is prepared on the silicon oxide particle, slurry stability, capacity properties, and initial efficiency may be further improved.

### [Best Mode]

Advantages and features of the present disclosure and methods of achieving them will become apparent from the following description of exemplary embodiments. However, the present disclosure is not limited to the exemplary embodiments disclosed below, but will be implemented in various forms. The exemplary embodiments of the present disclosure make the present disclosure thorough and are provided so that those skilled in the art can easily understand the scope of the present disclosure. Therefore, the present disclosure will be defined by the scope of the appended claims.

Unless otherwise defined herein, all terms used herein (including technical and scientific terms) may have meanings that are commonly understood by those skilled in the art. Throughout the present specification, unless explicitly described to the contrary, "comprising" any elements will be understood to imply further inclusion of other elements rather than the exclusion of any other elements. In addition, unless explicitly described to the contrary, a singular form includes a plural form herein.

In the present specification, it will be understood that when an element such as a layer, film, region, or substrate is referred to as being "on" or "above" another element, it can be directly on the other element or intervening elements may also be present.

In the present specification, "D50" refers to a particle diameter with a cumulative volume of 50% when cumulated from the smallest particle in measurement of a particle size distribution by a laser scattering method. In an exemplary embodiment, D50 may be obtained by collecting a sample for the material to be measured according to the standard of KS A ISO 13320-1 and measuring a particle size distribution using Mastersizer 3000 from Malvern Panalytical Ltd.

In the present specification, a "core-shell structure" refers to a structure in which a core material at the center is surrounded by a material forming a shell.

An exemplary embodiment of the present disclosure may provide a negative electrode active material for a secondary battery including: a silicon oxide particle including a metal silicate; and a hydrocarbon coating layer on the silicon oxide particle, wherein a peak Pa is detected in 2880 cm⁻¹ to 2950 cm⁻¹ and a peak Pb is detected in 2800 cm⁻¹ to 2865 cm⁻¹ in FT-IR spectral analysis of the negative electrode active material.

The negative electrode active material of the exemplary embodiment may include a silicon oxide particle including a metal silicate by pre-doping a silicon oxide particle having a low volume expansion rate in order to improve initial efficiency of a battery. In addition, according to the exemplary embodiment, a hydrocarbon coating layer having a specific composition may be provided to solve the problems such as gassing and a change in viscosity of a slurry over time which may occur in a silicon oxide-based negative electrode material.

The arrangement form of the hydrocarbon coating layer of the exemplary embodiment is not particularly limited as long as the hydrocarbon coating layer is prepared on at least a part or all of the silicon oxide particle. The negative electrode active material for a secondary battery of a specific exemplary embodiment for preventing elution of residual metal in a silicon oxide particle to further increase slurry stability may include the silicon oxide particle as a core and the hydrocarbon coating layer as a shell, and specifically, may have a core-shell structure including a silicon oxide core; and a hydrocarbon shell, but is not limited thereto.

The negative electrode active material for a secondary battery of the exemplary embodiment may include the hydrocarbon coating layer having a specific composition in which a peak Pa is detected in 2880 cm⁻¹ to 2950 cm⁻¹ and a peak Pb is detected in 2800 cm⁻¹ to 2865 cm⁻¹ in FT-IR spectral analysis of the negative electrode active material. The peaks Pa and Pb may refer to a maximum absorbance peaks derived from an aliphatic -CH₂ group in the wavenumber range, respectively.

According to the exemplary embodiment, a negative electrode active material having a hydrocarbon coating layer having a specific composition in which the Pa and Pb peaks are detected prepared on a silicon oxide particle may be provided, the hydrocarbon coating layer may be prepared without damage to the silicon oxide particle and/or a metal silicate, elution of residual metal in the silicon oxide particle may be prevented to significantly increase long-term slurry stability, and additionally, volume expansion of the silicon oxide particle during charge and discharge of a battery may be suppressed.

In a specific exemplary embodiment for better providing the effect, the negative electrode active material for a secondary battery may have a Sb/Sa value of more than 0, 0.1 or more, 0.2 or more, 0.3 or more and 0.7 or less, 0.6 or less, 0.5 or less, or between the numerical values, specifically more than 0 and 0.7 or less, more specifically for further improving long-term slurry stability, 0.1 to 0.6, and still more specifically 0.2 to 0.5, the Sb/Sa being a ratio of a peak area Sb in 2800 cm⁻¹ to 2865 cm⁻¹ to a peak area Sa in 2880 cm⁻¹ to 2950 cm⁻¹ in FT-IR spectral analysis of the negative electrode active material, but the present disclosure is not limited thereto. In the exemplary embodiment, the peak area Sa refers to an area value of the integral of the peak in a wave number from 2880 cm⁻¹ to 2950 cm⁻¹, and the peak area Sb refers to an area value of the integral of the peak in a wave number from 2800 cm⁻¹ to 2865 cm⁻¹.

Since the negative electrode active material for a secondary battery satisfying the Sb/Sa value range in the exemplary embodiment may include a hydrocarbon coating layer which is more uniform and has a sufficient thickness, prepared on the silicon oxide particle, elution of residual metal in the silicon oxide particle is better prevented to more significantly increase long-term slurry stability, and additionally, further suppress volume expansion of the silicon oxide particle during charge and discharge of a battery.

Though not particularly limited thereto, in an exemplary embodiment, the peak area Sa value may be more than 0 and 3.0 or less, 2.0 or less, 1.8 or less, 1.5 or less, 0.7 or less or between the numerical values, and specifically more than 0 and 3.0 or less or more than 0 and 2.0 or less. In order to secure a more uniform hydrocarbon coating layer in a specific exemplary embodiment, the peak area Sa value may be more than 0 and 1.8 or less. In a more specific exemplary embodiment in which the silicon oxide particle is pre-treated with a general acid solution and post-treated with a long-chain hydrocarbon organic acid solution to obtain a more uniform and stable hydrocarbon coating layer, the peak area Sa value may be more than 0 and 1.5 or less or more than 0 and 0.7 or less.

Though not particularly limited thereto, in an exemplary embodiment, the peak area Sb value may be more than 0 and 1.5 or less, 1.2 or less, 1.0 or less, 0.5 or less or between the numerical values, and specifically more than 0 and 1.5 or less or more than 0 and 1.2 or less. In order to secure a more uniform hydrocarbon coating layer in a specific exemplary embodiment, the peak area Sb value may be more than 0 and 1.0 or less. In a more specific exemplary embodiment in which the silicon oxide particle is pre-treated with a general acid solution and post-treated with a long-chain hydrocarbon organic acid solution to obtain a more uniform and stable hydrocarbon coating layer, the peak area Sb value may be more than 0 and 0.5 or less.

Hereinafter, the negative electrode active material for a secondary battery of the present exemplary embodiment will be described in detail.

In an exemplary embodiment, the silicon oxide particle may include a silicon oxide (SiOₓ (0<x≤2)); and one or two or more of Si, a Si-containing alloy, and a Si/C composite. The Si-containing alloy may be a Si-Q alloy, but is not limited thereto. Q is an element selected from the group consisting of alkali metals, alkaline earth metals, group 13 elements, group 14 elements other than Si, group 15 elements, group 16 elements, transition metals, rare earth elements, and combinations thereof. The element Q may be, for example, selected from the group consisting of Li, Mg, Na, K, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof, but is not limited thereto.

In an exemplary embodiment, the metal silicate may be formed by a metal doping process, and may include a metal silicate of any one of Li, Na, Mg, and K. In a specific exemplary embodiment, the metal silicate may include a lithium silicate. In a more specific exemplary embodiment, the lithium silicate may include a lithium silicate represented by the following Chemical Formula 1:

[Chemical Formula 1] LiₓSi_{y}O_{z}

wherein 1≤x≤6, 1≤y≤4, and 0<z≤7.

A non-limiting example of the lithium silicate may include Li₂SiO₃, Li₂Si₂O₅, Li₄SiO₄, and the like.

In an exemplary embodiment, the hydrocarbon coating layer may be prepared by immersing the silicon oxide particle in an organic acid solution and then drying, but the means for providing the hydrocarbon coating layer is not limited as long as the peaks Pa and Pb are detected. Without particular limitations, when the hydrocarbon coating layer includes a long chain hydrocarbon organic acid having 8 or more carbon atoms or a derivative thereof, the layer has increased hydrophobicity, and may maintain a coating layer structure stably on the surface of the silicon oxide particle without being dissolved in an aqueous slurry phase, and thus, the hydrocarbon coating layer having the specific composition may be provided better. In an exemplary embodiment, the hydrocarbon coating layer may include a straight-chain hydrocarbon organic acid having 8 or more, 10 or more, 12 or more, 16 or more, 18 or more and 40 or fewer, 36 or fewer, 32 or fewer, 30 or fewer carbon atoms, or carbon atoms between the numerical values, or a derivative thereof, and specifically, a straight-chain hydrocarbon organic acid having 8 to 40, 10 to 36, 12 to 32, 16 to 30, or 18 to 30 carbon atoms or a derivative thereof, but is not limited thereto.

In an exemplary embodiment, the straight-chain hydrocarbon organic acid may include one of a carboxyl group, a hydroxyl group, a sulfonic acid group, a phosphonic acid group, and combinations thereof, but is not limited thereto. In the exemplary embodiment, the derivative of the straight-chain hydrocarbon organic acid may be a reacted product between the straight-chain hydrocarbon organic acid and the silicon oxide particle.

In a specific exemplary embodiment, the straight-chain hydrocarbon organic acid may be a fatty acid, but is not limited thereto. A non-limiting example of the fatty acid may include oleic acid, palmitic acid, stearic acid, lauric acid, linoleic acid, arachidonic acid, and the like, and these may be used alone or in combination.

In the FT-IR spectral analysis of the negative electrode active material for a secondary battery when the fatty acid is adopted as the straight-chain hydrocarbon organic acid as in the above exemplary embodiment, a peak derived from a terminal carboxylic group may be further detected. In the FT-IR spectral analysis of the negative electrode active material for a secondary battery of an exemplary embodiment in which the fatty acid is adopted as the straight-chain hydrocarbon organic acid, peaks Pc1 and Pc2 may be further detected in 1520 cm⁻¹ to 1600 cm⁻¹.

In an exemplary embodiment, an average particle diameter (D50) of the silicon oxide particles may be 1 um or more, 2 um or more, 3 um or more, 30 um or less, 25 um or less, 20 um or less, or between the numerical values, and specifically 1 to 30 µm, 2 to 25 um, or 3 to 20 µm, but is not limited thereto.

The means for providing the negative electrode active material of the exemplary embodiment is not limited as long as it is provided, but, for example, the method of producing a negative electrode active material of the following exemplary embodiment may be used. Hereinafter, the method of producing a negative electrode active material for a secondary battery of the present exemplary embodiment will be described in detail.

In an exemplary embodiment, a method of producing a negative electrode active material for a secondary battery including: a) preparing a silicon oxide particle including a metal silicate; and b) immersing the silicon oxide particle in an organic acid solution to prepare a hydrocarbon coating layer on the silicon oxide particle, thereby preparing a negative electrode active material may be provided.

In an exemplary embodiment, the process a) may include a1) preparing a silicon oxide particle; and a2) a metal doping process of doping the silicon oxide particle with a metal. By performing the processes a1) and a2), the silicon oxide particle may be doped with a metal to prepare the silicon oxide particle including a metal silicate, thereby improving the capacity properties and the initial efficiency of the silicon oxide-based negative electrode material.

In an exemplary embodiment, the process a1) of preparing a silicon oxide particle may be mixing Si powder and SiO₂ powder as a raw material powder at an appropriate mixing ratio and performing a heat treatment to prepare the silicon oxide particle. In an exemplary embodiment, the heat treatment may be placing mixed powder of Si powder and SiO₂ powder in a furnace under an inert atmosphere, and performing a heat treatment at 500°C or higher and lower than 1800°C, lower than 1500°C, lower than 900°C, lower than 800°C, 700°C or lower, 650°C or lower under reduced pressure, or at a temperature between the numerical values, and specifically, performing a heat treatment at 500°C or higher and lower than 1800°C, 500°C or higher and lower than 1500°C, 500°C or higher and lower than 900°C, 500°C or higher and lower than 800°C, 500 to 700°C, or 500 to 650°C, but is not limited thereto. A heat treatment time may be 1 hour or more, 2 hours or more and 12 hours or less, 8 hours or less, or between the numerical values, and specifically 1 to 12 hours or 2 to 8 hours, but is not limited thereto.

In an exemplary embodiment, the process a2) of metal doping may be for solving a problem of forming an irreversible phase of a silicon oxide-based material during initial charge and discharge of a battery to deteriorate initial efficiency, and the means is not particularly limited as long as the silicon oxide particle is doped with the metal, but a non-limiting example of the process of doping the silicon oxide particle with a metal may include a heat treatment method of mixing the silicon oxide particle and a metal precursor and performing a heat treatment, an impregnation method of impregnating the silicon oxide particle in a solution including a metal salt as a metal precursor, a contact method of bringing a metal precursor and the silicon oxide particle into contact in a solution including an electrolyte solution, a deposition method of depositing metal steam as a metal precursor on the silicon oxide particle, and the like.

In an exemplary embodiment, the metal precursor of the process a2) of metal doping may include one or two or more selected from the group consisting of Li, Na, Mg, and K, and specifically, the metal precursor may include one or two or more of metal particles including one or two or more selected from the group consisting of Li, Na, Mg, and K; and metal hydrides, metal hydroxides, metal oxides, or metal carbides including one or two or more selected from the group consisting of Li, Na, Mg, and K. A specific example of the metal precursor may be a Li precursor including at least one selected from LiOH, Li, LiH, Li₂O, and Li₂CO₃, but is not limited thereto.

In an exemplary embodiment, the process a2) of metal doping may be performed by a heat treatment method of mixing the silicon oxide particle and the metal precursor and performing a heat treatment. According to the exemplary embodiment, the process a) may include a1) preparing a silicon oxide particle; and a2) a metal doping process of mixing the silicon oxide particle and the metal precursor and performing a heat treatment to dope the silicon oxide particle with a metal.

In the exemplary embodiment of performing the process a2) of metal doping by the heat treatment method, the silicon oxide particle and the metal precursor may be mixed at a M/Si (metal/silicon) mole ratio of 0.3 or more, 0.4 or more, 0.5 or more and 1.2 or less, 1.0 or less, 0.8 or less or between the numerical values, and specifically may be mixed at the M/Si (metal/silicon) mole ratio of 0.3 to 1.2 or 0.4 to 1.0, and more specifically 0.5 to 0.8. In particular, when a Li precursor is used as the metal precursor, an optimal ratio between Li₂SiO₃ and Li₂Si₂O₅ may be found in the mole ratio range, and formation of c-Si and Li₄SiO₄ may be suppressed to significantly improve the electrochemical performance of a battery.

In the exemplary embodiment of performing the process a2) of metal doping by the heat treatment method, the heat treatment conditions may be, for example, heat treating at 500°C or higher and lower than 700°C for 1 to 12 hours under an inert atmosphere. When the heat treatment is performed at a temperature lower than 700°C, Si crystal growth may be suppressed to better secure amorphous or microcrystalline silicon oxide particles. In addition, when the heat treatment is performed at a temperature of 500°C or higher, the crystal phase growth of the silicon oxide particles may be further suppressed while further increasing a metal doping effect.

As an example of the inert atmosphere, a known method in which the inside of a reaction unit is purged with an inert gas to create an inert atmosphere may be applied, and the inert gas may be selected from Ne, Ar, Kr, N₂, and the like alone or in combination, and specifically, may use Ar or N₂, and the present disclosure is not limited thereto.

Subsequently, the product of the process a) is recovered and pulverized, thereby producing the silicon oxide particles including the metal silicate. As the pulverization process, a known pulverization method may be applied, but is not limited thereto.

In an exemplary embodiment, the metal silicate of the process a) may include a metal silicate of any one of Li, Na, Mg, and K. In a specific exemplary embodiment, the metal silicate may include a lithium silicate. In a more specific exemplary embodiment, the lithium silicate may include a lithium silicate represented by the following Chemical Formula 1:

[Chemical Formula 1] LiₓSi_{y}O_{z}

wherein 1≤x≤6, 1≤y≤4, and 0<z≤7.

A non-limiting example of the lithium silicate may include Li₂SiO₃, Li₂Si₂O₅, Li₄SiO₄, and the like.

In an exemplary embodiment, the process b) of immersing the silicon oxide particle in an organic acid solution to prepare a hydrocarbon coating layer on the silicon oxide particle may be performed. According to the exemplary embodiment, residual metal in the silicon oxide particle is removed and damage to the silicon oxide particle and/or the metal silicate may be significantly decreased by treating the silicon oxide particle including the metal silicate which has undergone a metal pre-doping process with an organic acid, specifically a long-chain hydrocarbon organic acid solution, and the hydrocarbon coating layer is provided on the silicon oxide particle to prevent further elution of residual metal in the silicon oxide particle, thereby significantly decreasing slurry gas emission even when the slurry is left for a long time and significantly improving slurry stability. In addition, the hydrocarbon coating layer additionally has an effect of suppressing volume expansion of the silicon oxide particle during charge and discharge of a battery.

Without particular limitations, when the organic acid of the process b) is a long-chain hydrocarbon organic acid, the layer has increased hydrophobicity, and may maintain a coating layer structure stably on the surface of the silicon oxide particle without being dissolved in an aqueous slurry, and thus, the effect may be better provided. In an exemplary embodiment, the organic acid of the process b) may be a straight-chain hydrocarbon organic acid having 8 or more, 10 or more, 12 or more, 16 or more, 18 or more and 40 or fewer, 36 or fewer, 32 or fewer, 30 or fewer carbon atoms, or carbon atoms between the numerical values, in consideration of the solubility, and may be a straight-chain hydrocarbon organic acid having specifically, 8 to 40 or 10 to 36, more specifically, 12 to 32, 16 to 30, or 18 to 30 carbon atoms, but is not limited thereto.

In an exemplary embodiment, the straight-chain hydrocarbon organic acid may include one of a carboxyl group, a hydroxyl group, a sulfonic acid group, a phosphoric acid group, and combinations thereof, but is not limited thereto.

In a specific exemplary embodiment, the straight-chain hydrocarbon organic acid may include a fatty acid, but is not limited thereto. A non-limiting example of the fatty acid may include oleic acid, palmitic acid, stearic acid, lauric acid, linoleic acid, arachidonic acid, and the like, and these may be used alone or in combination.

The composition of the organic acid solution of the process b) is not limited as long as the organic acid solution includes the organic acid of the exemplary embodiment described above, and various components may be selectively further included. In an exemplary embodiment, the organic acid solution of the process b) may include the organic acid alone or in combination, but is not limited thereto.

It is favorable for the molar concentration of the organic acid solution of the process b) to be at a certain level or higher for better removing the residual metal in the silicon oxide particle and providing the hydrocarbon coating layer, but when the molar concentration is excessive, the capacity of the negative electrode active material may be rather deteriorated, and thus, the capacity properties may be better maintained at the molar concentration of a certain level or lower. In an exemplary embodiment, the molar concentration of the organic acid solution of the process b) may be 0.01 M or more and 0.05 M or more, 0.1 M or more and 0.5 M or less, 0.4 M or less, 0.3 M or less or between the numerical values, and specifically, 0.01 to 0.5 M, 0.05 to 0.4 M, or 0.1 to 0.3 M, but is not limited thereto.

The solvent of the organic acid solution of the process b) may be any solvent known in the art without limitation as long as the organic acid is dissolved in the solvent, but for example, may be water, alcohol, tetrahydrofuran (THF), dimethylformamide (DMF), and the like.

In an exemplary embodiment, the hydrocarbon coating layer in the process b) may be prepared by drying the organic acid-treated silicon oxide particle. When a drying temperature is excessively high, the organic acid component forming the hydrocarbon coating layer may be thermally decomposed, which leads to damaged durability of the hydrocarbon coating layer, and thus, the effect to be desired in the present disclosure may not be secured. However, the drying temperature is excessively low, thermal energy may not be sufficient for strengthening a binding force between the silicon oxide component forming the particle and the organic acid component in the hydrocarbon coating layer. Taking this into consideration, in an exemplary embodiment, the drying temperature may be 50°C or higher, 80°C or higher, 100°C or higher, 120°C or higher, 300°C or lower, 250°C or lower, 200°C or lower, 180°C or lower, or between the numerical values, and specifically, may be 50 to 300°C, 80 to 250°C, 100 to 200°C, or 120 to 180°C, but is not limited thereto.

Meanwhile, unlike forming the hydrocarbon coating layer with the organic acid in the present disclosure, when a method of adding the organic acid with the negative electrode active material in the production of the negative electrode slurry to neutralize a pH rise by residual metal is adopted, residual metal which is continuously eluted in the production of the negative electrode slurry may be neutralized in a short time, but when the negative electrode slurry is left for a long time, the residual metal is continuously eluted to increase the pH again, resulting in a decrease in viscosity of the negative electrode slurry. In addition, when the negative electrode active material component or the composition of the negative electrode slurry is changed, the amount of the organic acid added should be changed together, and when the amount of the organic acid added is increased, it may act as impurities in the negative electrode slurry to cause problems such as deterioration of capacity or initial efficiency or deterioration of life characteristics.

However, when the hydrocarbon coating layer is prepared on the silicon oxide particle according to the exemplary embodiment of the present disclosure, the elution of residual metal itself in the production of an aqueous negative electrode slurry may be suppressed, and thus, the residual metal is not eluted again even in the case of leaving the negative electrode slurry for a long time to significantly improve slurry stability, and the composition of the negative electrode slurry may be freely changed without particular limitations.

In a specific exemplary embodiment, when the silicon oxide particle is optionally pre-treated with a general acid solution in order to remove residual metal in the silicon oxide particle before preparing the hydrocarbon coating layer, and when the hydrocarbon coating layer is prepared, slurry stability, capacity properties, and initial efficiency may be further improved.

In a specific exemplary embodiment of further removing the residual metal in the silicon oxide particle and preparing the hydrocarbon coating layer on the silicon oxide particle from which the residual metal has been better removed to further improve slurry stability, the process b) may include b1) immersing the silicon oxide particle in an acid solution including an inorganic acid or an organic acid having 6 or fewer carbon atoms; and b2) immersing the resulting product of the process b1) in an organic acid solution to prepare a hydrocarbon coating layer, but is not limited thereto.

In an exemplary embodiment, in order to further remove the residual metal in the silicon oxide particle before preparing the hydrocarbon coating layer, the process b1) of immersing the silicon oxide particle in an inorganic acid or an organic acid having 6 or fewer carbon atoms may be further performed. In the exemplary embodiment, the acid solution may be a solution including an inorganic acid or an organic acid having 6 or fewer carbon atoms alone or in combination.

In an exemplary embodiment, the inorganic acid may include hydrochloric acid (HCl), perchloric acid (HClO₄), hypochlorous acid (HClO), sulfuric acid (H₂SO₄), nitric acid (HNO₃), phosphoric acid (H₃PO₄), hydrofluoric acid (HF), and a combination thereof, but is not limited thereto.

In an exemplary embodiment, the organic acid having 6 or fewer carbon atoms may include formic acid, butyric acid, acetic acid, lactic acid, tartaric acid, malic acid, propionic acid, citric acid, and a combination thereof, but is not limited thereto.

The residual metal in the silicon oxide particle may be better removed when the molar concentration of the acid solution of the process b1) is at a certain level or higher, but when the molar concentration is excessive, the silicon oxide particle and/or the metal silicate is/are damaged to rather deteriorate the capacity properties or the initial efficiency, and thus, it is more favorable for the molar concentration to be at a certain level or lower for securing excellent capacity properties and initial efficiency. In an exemplary embodiment, the molar concentration of the acid solution of the process b1) may be 0.01 M or more, 0.05 M or more, 0.1 M or more, 1.0 M or less, 0.8 M or less, 0.6 M or less or between the numerical values, and specifically, may be 0.01 to 1.0 M, 0.05 to 0.8 M, or 0.1 to 0.6 M, but is not limited thereto.

The process b2) may be a process of immersing the process resultant of the process b1), that is, the silicon oxide particle from which the residual metal has been removed in an organic acid solution to prepare a hydrocarbon coating layer. By performing the process b2) subsequently, the residual metal in the silicon oxide particle formed by the metal doping process may be further removed again and the damage to the silicon oxide particle and/or the metal silicate may be significantly decreased, and the hydrocarbon coating layer is provided on the silicon oxide particle from which the residual metal has been better removed to prevent further elution of the residual metal in the silicon oxide particle to further increase slurry stability, and the prepared hydrocarbon coating layer may have an effect of suppressing the volume expansion of the silicon oxide particle. Since the description of the organic acid of the process b2) is as described above, it will be omitted for convenience.

In is favorable for the molar concentration of the organic acid solution of the process b2) to be at a certain level or higher for better removing the residual metal in the silicon oxide particle and providing the hydrocarbon coating layer, but when the molar concentration is excessive, the capacity of the negative electrode active material may be rather deteriorated, and thus, the capacity properties may be better maintained at the molar concentration of a certain level or lower. In an exemplary embodiment, the molar concentration of the organic acid solution of the process b2) may be 0.01 M or more and 0.05 M or more, 0.1 M or more and 0.5 M or less, 0.4 M or less, 0.3 M or less or between the numerical values, and specifically, 0.01 to 0.5 M, 0.05 to 0.4 M, or 0.1 to 0.3 M, but is not limited thereto.

The solvent of the acid solution of the process b1) and the organic solution of the process b2) may be any solvent known in the art without limitation as long as the acid component is dissolved in the solvent, but for example, may be water, alcohol, tetrahydrofuran (THF), dimethylformamide (DMF), and the like.

In an exemplary embodiment, the hydrocarbon coating layer in the process b2) may be prepared by drying the organic acid-treated silicon oxide particle. When a drying temperature is excessively high, the organic acid component forming the hydrocarbon coating layer may be thermally decomposed, which leads to damaged durability of the hydrocarbon coating layer, and thus, the effect to be desired in the present disclosure may not be secured. However, the drying temperature is excessively low, thermal energy may not be sufficient for strengthening a binding force between the silicon oxide component forming the particle and the organic acid component in the hydrocarbon coating layer. Taking this into consideration, in an exemplary embodiment, the drying temperature may be 50°C or higher, 80°C or higher, 100°C or higher, 120°C or higher, 300°C or lower, 250°C or lower, 200°C or lower, 180°C or lower, or between the numerical values, and specifically, may be 50 to 300°C, 80 to 250°C, 100 to 200°C, or 120 to 180°C, but is not limited thereto.

In an exemplary embodiment, a negative electrode for a secondary battery including the negative electrode active material according to the exemplary embodiment described above may be provided. In an exemplary embodiment, the negative electrode may be produced by preparing a negative electrode slurry including the negative electrode active material of the exemplary embodiment described above, a binder, a conductive material, and the like, and then applying the prepared negative electrode slurry on a current collector, drying and rolling, but is not limited thereto. The binder, the conductive material, and the current collector may use all materials known in the art without limitation, and are not limited.

In an exemplary embodiment, the negative electrode may optionally further include graphite. The graphite may be natural graphite or artificial graphite, but is not particularly limited.

In an exemplary embodiment, the composition of the negative electrode is not particularly limited as long as the negative electrode includes the negative electrode active material of the exemplary embodiment described above, but according to a non-limiting example, the negative electrode may include more than 0 wt% and 40 wt% or less of the negative electrode active material of the exemplary embodiment described above and 50 wt% or more of graphite, based on the total weight of the solid content, and may optionally further include 1.0 wt% or less of the conductive material and 10.0 wt% or less of the binder. A non-limiting example of the conductive material may include single wall-CNT (SW-CNT), multi wall-CNT (MW-CNT), thin wall-CNT (TW-CNT), or the like. A non-limiting example of the binder may include a carboxyl methyl cellulose (CMC) binder, a styrene-butadiene rubber (SBR) binder, or the like.

In an exemplary embodiment, a secondary battery including the negative electrode of the exemplary embodiment described above, a positive electrode, a separator prepared between the negative electrode and the positive electrode, and an electrolyte solution may be provided.

The positive electrode may include, for example, a current collector and a positive electrode active material layer formed by applying a positive electrode slurry including a positive electrode active material on the current collector.

The current collector may be the same as the current collector of the negative electrode described above, or may use the current collectors of all materials known in the art without limitation.

The positive electrode active material layer includes a positive electrode active material, and optionally, may further include a binder and a conductive material. The positive electrode active material may use any positive electrode active material known in the art without limitation, but a non-limiting example of the positive electrode active material may be a composite oxide of a metal selected from cobalt, manganese, nickel, and a combination thereof with lithium.

The binder and the conductive material may use, for example, the negative electrode binder and the negative electrode conductive material described above, or may use all materials known in the art without limitation.

The separator may use any separator known in the art, but a non-limiting example of the separator may be, for example, a separator including glass fiber, polyester, polyethylene, polypropylene, polytetrafluoroethylene, or a combination thereof, or in a non-woven fabric or a woven-fabric form. Another non-limiting example of the separator may be a polyolefin-based polymer separator such as polyethylene and polypropylene, a separator coated with a composition including a ceramic component or a polymer material for securing heat resistance or mechanical strength, or a single layer or multi-layer separator.

The electrolyte solution may include, for example, an organic solvent and a lithium salt, but is not limited thereto.

The organic solvent may be, for example, a carbonate-based, ester-based, ether-based, ketone-based, alcohol-based, or aprotic solvent alone or in combination of two or more, and when it is used in combination of two or more, a mixing ratio may be properly adjusted depending on the battery performance to be desired, but is not limited thereto.

The lithium salt may include, for example, LiPF₆, LiBF₄, LiSbF₆, LiAsF₆, LiN(SO₃C₂F₅)₂, LiN(CF₃SO₂)₂, LiC₄F₉SO₃, LiClO₄, LiAlO₂, LiAlCl₄, LiN(CₓF₂ₓ₊₁SO₂)(C_{y}F_{2y+1}SO₂) (x and y are natural numbers), LiCl, LiI, LiB(C₂O₄)₂, or a combination thereof, but is not limited thereto.

A concentration of the lithium salt may be, for example, 0.1 to 2.0 M, but is not limited thereto.

The secondary battery in an exemplary embodiment for providing the secondary battery of the exemplary embodiment may be produced by laminating the negative electrode, the separator, and the positive electrode in this order to form an electrode assembly, placing the produced electrode assembly in a cylindrical battery case or an angled battery case, and then injecting an electrolyte solution. In another exemplary embodiment, the secondary battery may be produced by laminating the electrode assembly, impregnating the assembly in the electrolyte solution, placing the resultant product in a battery case, and sealing the case. However, the method of producing a secondary battery is not limited to the examples described above.

As the battery case, those commonly used in the art may be adopted and there is no limitation in appearance depending on the battery use, and for example, a cylindrical shape, an angled shape, a pouch shape, a coin shape, or the like using a can may be used.

The secondary battery of the exemplary embodiment may be used in a battery cell used as a power supply of a small device, and also may be preferably used as a unit cell in a medium or large battery module including a plurality of battery cells. An example of the medium or large battery module may include an electric automobile, a hybrid electric automobile, a plug-in hybrid electric automobile, a system for power storage, and the like. However, the use of the secondary battery is not limited to the examples described above.

Hereinafter, the preferred examples and the comparative examples of the present disclosure will be described. However, the following examples are only preferred examples of the present disclosure, and the present disclosure is not limited thereto.

Hereinafter, the measurement and evaluation methods of physical properties will be described first.

### Slurry gas emission

Bubbles of a slurry were removed as much as possible, the slurry was added to a sealable cylindrical container, and pressed, sealed, and waited for 1 day or 4 days, and the volume increased of the cylindrical container to the weight of the slurry added was measured to derive a slurry gas emission (ml/g) .

### Discharge capacity, initial efficiency

A (half) battery was charged at a constant current at room temperature (25°C) until the voltage reached 0.01 V (vs. Li/Li⁺) at a current of 0.1 C rate, and then was charged with a constant voltage by cut-off at a current of 0.01 C rate while maintaining 0.01 V in a constant voltage mode. The battery was discharged with a constant current of 0.1 C rate until the voltage reached 1.5 V (vs. Li/Li⁺) to measure the (initial) discharge capacity and the initial efficiency.

In the case of a negative electrode produced by mixing the silicon oxide-based negative electrode active material and graphite together for evaluating the discharge capacity and the initial efficiency of the silicon oxide-based negative electrode active material of the present disclosure, evaluation was performed by assuming a negative electrode including the silicon oxide-based negative electrode active material alone at the same content as the mixed content of the silicon oxide-based negative electrode active material and graphite, with the contribution of discharge capacity and initial efficiency contributed by graphite being excluded to calibrate the discharge capacity and the initial efficiency.

### [Examples]

### Examples 1 and 2

### (Negative electrode active material)

### Process a)

A raw material in which a silicon metal and silicon dioxide were mixed was introduced to a reaction furnace at 600°C and evaporated in the atmosphere of a vacuum degree of 10 Pa to obtain a product, which was deposited on a suction plate and sufficiently cooled, and then a deposit was taken out and pulverized with a ball mill to prepare silicon oxide particles. Continuously, a particle diameter of the silicon oxide particle was adjusted by classification. An average particle diameter (D50) of the silicon oxide particle was 8 um.

The silicon oxide particles produced and LiH powder as a metal precursor were mixed at a Li/Si mole ratio of 0.3 to 1.2 to form mixed powder, and the mixed powder was filtered using a sieve of 25 to 500 um and heat-treated in a furnace under a nitrogen gas atmosphere at 600°C for 1 to 12 hours to dope the silicon oxide particle with lithium metal. Subsequently, the heat-treated powder was recovered and then pulverized to produce silicon oxide particles including lithium silicate (such as Li₂Si₂O₅ and Li₂SiO₃) .

### Process b)

The silicon oxide particles produced in the process a) were immersed in the organic acid solution listed in the following Table 1, filtered, and dried under vacuum at 150°C to produce a negative electrode active material having a hydrocarbon coating layer formed on the silicon oxide particle.

### (Negative electrode slurry, negative electrode)

5 to 30 wt% of the negative electrode active material produced, 66 to 92 wt% of artificial graphite, 0.05 to 0.3 wt% of single wall-CNT (SW-CNT), 1.0 to 2.0 wt% of a carboxylmethyl cellulose (CMC) binder, and 1.0 to 3.0 wt% of a styrene-butadiene rubber (SBR) binder, based on the total weight of the solid content, were mixed in distilled water to prepare a negative electrode slurry. The negative electrode slurry was applied on a Cu foil current collector, dried, and rolled to produce a negative electrode having a negative electrode active material layer prepared on the current collector by a common process.

### (Half battery)

The produced negative electrode and a lithium metal as a counter electrode were used, a PE separator was interposed between the negative electrode and the counter electrode, an electrolyte solution was injected thereto, and a coin cell (CR2016) was assembled. The assembled coin cell was paused at room temperature for 3 to 24 hours to produce a half battery. At this time, the electrolyte solution was obtained by mixing 1.0 M LiPF₆ as a lithium salt with an organic solvent (EC:EMC = 30:70 vol%) and mixing 10 vol% of fluoroethylene carbonate(FEC) as an electrolyte additive.

### Examples 3 to 10

In performing the process b), the silicon oxide particles produced in the process a) were immersed in the acid solution listed in the following Table 1 and then filtered. Thereafter, the silicon oxide particles were immersed in the organic acid solution listed in the following Table 1, filtered, and dried under vacuum at 150°C to produce a negative electrode active material having a hydrocarbon coating layer formed on the silicon oxide particle. A negative electrode active material, a negative electrode slurry, a negative electrode, and a half battery were produced under the same conditions as in Example 1 except the above production conditions.

### ref.

A negative electrode active material, a negative electrode slurry, a negative electrode, and a half battery were produced under the same conditions as in Example 1 except that the process b) was not performed.

### Comparative Examples 1 to 5

A negative electrode active material, a negative electrode slurry, a negative electrode, and a half battery were produced under the same conditions as in Example 1 except that, in performing the process b), the silicon oxide particles produced by the process a) were immersed in the acid solution listed in the following Table 1, filtered, and dried at room temperature for 24 hours to produce a final negative electrode active material.

### Evaluation Example 1: Evaluation of slurry stability, discharge capacity, and initial efficiency

**[Table 1]**

| | Acid solution | | Organic acid solution | | Slurry gas emission [ml/g] | | Discharge capacity [mAh/g] | Initial efficiency [%] |
|---|---|---|---|---|---|---|---|---|
| | Type of acid | Concent ration [M] | Type of acid | Concent ration [M] | After 1 day | After 4 days | | |
| Example 1 | - | - | Oleic acid | 0.05 | 0.2 | 0.5 | 1288 | 88.6 |
| Example 2 | - | - | Oleic acid | 0.15 | 0.1 | 0.2 | 1312 | 88.2 |
| Example 3 | Citric acid | 0.19 | Oleic acid | 0.15 | 0.0 | 0.0 | 1307 | 91.7 |
| Example 4 | Citric acid | 0.24 | Oleic acid | 0.15 | 0.0 | 0.0 | 1320 | 88.9 |
| Example 5 | Acetic acid | 0.24 | Oleic acid | 0.15 | 0.0 | 0.0 | 1346 | 89.5 |
| Example 6 | Citric acid | 0.48 | Lauric acid | 0.15 | 0.04 | 0.05 | 1351 | 90.6 |
| Example 7 | Ammonium citrate | 0.38 | Lauric acid | 0.15 | 0.12 | 0.3 | 1297 | 88.4 |
| Example 8 | Ammonium sulfate | 0.57 | Lauric acid | 0.15 | 0.14 | 0.2 | 1304 | 89.1 |
| Example 9 | Citric acid | 0.24 | Ammonium lauryl sulfate | 0.15 | 0.00 | 0.39 | 1311 | 88.0 |
| Example 10 | Citric acid | 0.24 | Oleyl phosphate | 0.15 | 0.00 | 0.44 | 1304 | 88.8 |
| ref. | - | - | - | - | ≥1.6 | ≥1.6 | 1150 | 81.1 |
| Comparative Example 1 | Citric acid | 0.19 | - | - | 0.8 | ≥1.6 | 1294 | 84.4 |
| Comparative Example 2 | Acetic acid | 0.19 | - | - | 0.2 | ≥1.6 | 1356 | 87.4 |
| Comparative Example 3 | Citric acid | 0.05 | - | - | ≥1.6 | ≥1.6 | 1194 | 83.1 |
| Comparative Example 4 | Citric acid | 0.05 | - | - | 1.2 | ≥1.6 | 1285 | 84.7 |
| | Acetic acid | 0.05 | | | | | | |
| Comparative Example 5 | Citric acid | 0.48 | - | - | 0.68 | ≥1.6 | 1312 | 85.2 |

Referring to the results of Table 1, in Examples 1 to 10, as a result of removing residual metal in the silicon oxide particles by the organic acid (oleic acid, lauric acid, ammonium lauryl sulfate, oleyl phosphate, and the like) on the silicon oxide particles and preparing the hydrocarbon coating layer, the slurry gas emission was significantly decreased, and in particular, the elution of the residual metal was prevented even when the negative electrode slurry was left for a long time, and thus, the slurry gas emission was significantly low. From the results, it was confirmed that significantly excellent slurry stability was secured as compared with ref. which did not undergo process b). In addition, simultaneously, since Examples 1 to 10 had excellent discharge capacity and initial efficiency as compared with ref., it was confirmed that the residual metal was well removed and the elution of the residual metal was suppressed while decreasing damage to the silicon oxide particle and/or the metal silicate.

Among Examples 1 to 10, in particular, in Examples 3 to 10, in order to more effectively remove the residual metal in the silicon oxide particles, a process of immersing the silicon oxide particles in an acid solution and filtering was first performed, and the residual metal was removed again with the organic acid (oleic acid, lauric acid, ammonium lauryl sulfate, oleyl phosphate, and the like) to prepare the hydrocarbon coating layer on the silicon oxide particle. As a result, in Examples 3 to 10, it was confirmed that the hydrocarbon coating layer was prepared on the silicon oxide particle from which the residual metal was better removed and the slurry stability was better and the discharge capacity and the initial efficiency were also better than those of Examples 1 and 2.

However, in Comparative Examples 1 to 5, the residual metal was removed by an acid solution without forming the hydrocarbon coating layer, and the results that the slurry gas emission was less and the discharge capacity and the initial efficiency were improved to some extent when left for a short time as compared with ref. were shown. However, in Comparative Examples 1 to 5, as a result of not forming the hydrocarbon coating layer, the slurry gas emission was excessively caused by the residual metal which was constantly eluted when the negative electrode slurry was left for a long time, and thus, the slurry stability to be desired in the present disclosure was not able to be secured.

Specifically, in Comparative Examples 1, 2, and 5, as a result of removing the residual metal in the silicon oxide particles by a high-concentration acid solution as compared with Comparative Examples 3 and 4, the slurry gas emission was low after 1 day, but after leaving for a long time of 4 days, a large amount of the slurry gas was produced so that slurry stability was poor and the discharge capacity and the initial efficiency were deteriorated, and thus, electrochemical properties were also poor.

In Comparative Examples 3 and 4, as a result of removing the residual metal in the silicon oxide particle by a low-concentration acid solution as compared with Comparative Examples 1, 2, and 5, gassing immediately started, so that slurry stability was poor and the discharge capacity and the initial efficiency were deteriorated, and thus, electrochemical properties were also poor.

### Evaluation Example 2: Analysis of composition of hydrocarbon coating layer

In order to analyze the composition of the hydrocarbon coating layer, the FT-IR analysis of the negative electrode active material was performed, and the FT-IR analysis conditions were as follows:
Base-line region: 2791 cm⁻¹ to 2970 cm⁻¹
Peak region
: CH₂ 2880 cm⁻¹ to 2950 cm⁻¹
: CH₂ 2800 cm⁻¹ to 2865 cm⁻¹
Equipment information
Maker: Thermo Fisher
Model: Nicolet 6700
Detector: DTGS KBr
ATR mode(Diamond crystal)
Measurement conditions
Measurement range: 4000 cm⁻¹ to 650 cm⁻¹
Resolution: 8cm⁻¹
Number of measurements per analysis sample: 32 scans

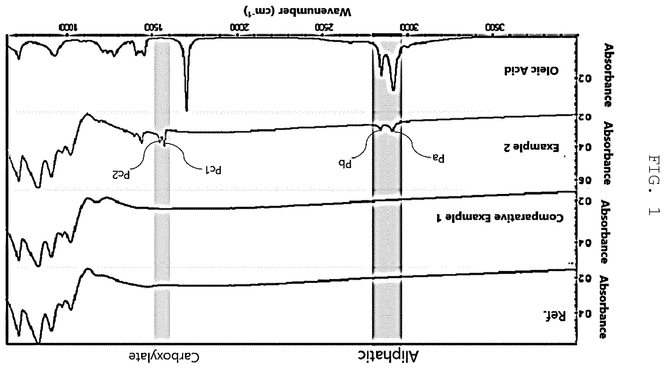

The results of the FT-IR analytical spectrum of the negative electrode active material of Example 2, ref., and Comparative Example 1, and oleic acid samples are shown in FIG. 1. Referring to FIG. 1, in Example 2 of the present exemplary embodiment, a hydrocarbon coating layer in which peaks Pa and Pb derived from oleic acid were detected in 2880 cm⁻¹ to 2950 cm⁻¹ and in 2800 cm⁻¹ to 2865 cm⁻¹, respectively, was confirmed, but in ref. and Comparative Example 1, the peaks Pa and Pb were not detected, and thus, it was confirmed that the hydrocarbon coating layer to be desired in the present disclosure was not formed.

In addition, referring to FIG. 1, in Example 2, the hydrocarbon coating layer was formed well and peaks Pc1 and Pc2 derived from a terminal carboxyl group of the oleic acid were further detected in 1520 cm⁻¹ to 1600 cm⁻¹, but in Comparative Example 1, the hydrocarbon coating layer was not formed and the peaks Pc1 and Pc2 derived from the carboxyl group of citric acid were not detected.

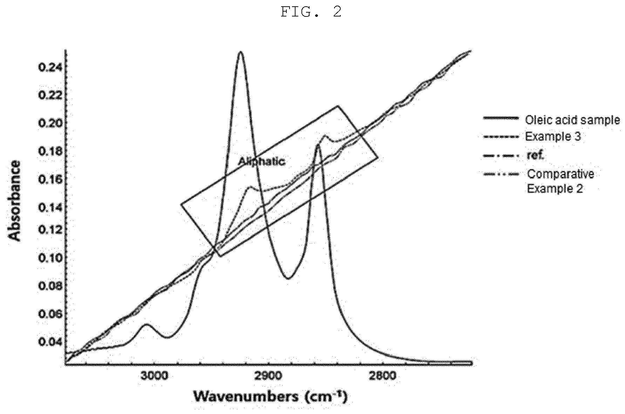

In order to confirm the peaks Pa and Pb precisely, FT-IR analysis of the negative electrode active material, oleic acid samples of Example 3, ref., and Comparative Example 2 was performed in 2700 cm⁻¹ to 3100 cm⁻¹ which is a narrower wave number range. The results are shown in FIG. 2. Referring to FIG. 2, in Example 3 of the present exemplary embodiment, a hydrocarbon coating layer in which peaks Pa and Pb derived from oleic acid were detected in 2880 cm⁻¹ to 2950 cm⁻¹ and in 2800 cm⁻¹ to 2865 cm⁻¹, respectively, was confirmed, but in ref. and Comparative Example 2, the peaks Pa and Pb were not detected, and thus, it was confirmed that the hydrocarbon coating layer to be desired in the present disclosure was not formed.

In Examples 1 to 10, the peaks Pa and Pb were both detected as in Examples 2 and 3, and the peak areas of the Examples 1 to 10 in which the peaks Pa and Pb were detected were analyzed and the results are shown in the following Table 2:

**[Table 2]**

| | Peak area | | |
|---|---|---|---|
| | Sa | Sb | Sb/Sa |
| Example 1 | 0.949 | 0.511 | 0.538 |
| Example 2 | 1.673 | 0.868 | 0.519 |
| Example 3 | 0.072 | 0.035 | 0.486 |
| Example 4 | 0.065 | 0.029 | 0.446 |
| Example 5 | 0.145 | 0.064 | 0.441 |
| Example 6 | 0.169 | 0.068 | 0.402 |
| Example 7 | 0.684 | 0.472 | 0.690 |
| Example 8 | 0.590 | 0.337 | 0.571 |
| Example 9 | 0.359 | 0.133 | 0.370 |
| Example 10 | 0.292 | 0.092 | 0.315 |
| Oleic acid sample | 7.282 | 3.082 | 0.423 |

The peak area Sa refers to an area value of the integral of the peak in a wave number from 2880 cm⁻¹ to 2950 cm⁻¹, and the peak area Sb refers to an area value of the integral of the peak in a wave number from 2800 cm⁻¹ to 2865 cm⁻¹.

Referring to the results of Table 2, when the FT-IR spectral analysis of the negative electrode active material was performed, the negative electrode active material of Examples 1 to 10 had a Sb/Sa ratio of 0.7 or less, and it was confirmed that a more uniform hydrocarbon coating layer having a sufficient thickness was prepared on the silicon oxide particle to better prevent the elution of the residual metal in the silicon oxide particle and more significantly increase long-term slurry stability.

In Examples 1 and 2 which were treated with the long-chain hydrocarbon organic acid solution alone, the slurry gas emission was suppressed to some extent, but the slurry stability was relatively poor as compared with Examples 3 to 10 in which the silicon oxide particles were pre-treated with a general acid solution and post-treated with the long-chain hydrocarbon organic acid solution. From the results of Table 2, Examples 1 and 2 had a Sa value of 0.949 and 1.673, respectively, but Examples 3 to 10 had a Sa value of 0.7 or less, and thus, it was confirmed that a more uniform and stable hydrocarbon coating layer was obtained. In addition, Examples 1 and 2 had a Sb value of 0.511 and 0.868, respectively, but Examples 3 to 10 had a Sb value of 0.5 or less, and thus, it was confirmed that a more uniform and stable hydrocarbon coating layer was obtained.

Although the exemplary embodiments of the present disclosure have been described above, the present disclosure is not limited to the exemplary embodiments but may be made in various forms different from each other, and those skilled in the art will understand that the present disclosure may be implemented in other specific forms without departing from the essential feature of the present disclosure. Therefore, it should be understood that the exemplary embodiments described above are not restrictive, but illustrative in all aspects.

## Claims

1. A negative electrode active material for a secondary battery comprising:
a silicon oxide particle including a metal silicate; and
a hydrocarbon coating layer on the silicon oxide particle,
wherein a peak Pa is detected in 2880 cm⁻¹ to 2950 cm⁻¹ and a peak Pb is detected in 2800 cm⁻¹ to 2865 cm⁻¹ in FT-IR spectral analysis of the negative electrode active material.

2. The negative electrode active material for a secondary battery of claim 1, wherein the negative electrode active material has a Sb/Sa value of 0.7 or less, the Sb/Sa being a ratio of a peak area Sb in 2800 cm⁻¹ to 2865 cm⁻¹ to a peak area Sa in 2880 cm⁻¹ to 2950 cm⁻¹ in the FT-IR spectral analysis of the negative electrode active material.

3. The negative electrode active material for a secondary battery of claim 2, wherein the Sb/Sa value is 0.5 or less.

4. The negative electrode active material for a secondary battery of claim 2, wherein the peak area Sa value is 3.0 or less.

5. The negative electrode active material for a secondary battery of claim 2, wherein the peak area Sb value is 1.5 or less.

6. The negative electrode active material for a secondary battery of claim 1, wherein peaks Pc1 and Pc2 are further detected in 1520 cm⁻¹ to 1600 cm⁻¹ in the FT-IR spectral analysis of the negative electrode active material.

7. The negative electrode active material for a secondary battery of claim 1, wherein the metal silicate includes a metal silicate of any one of Li, Na, Mg, and K, optionally wherein the metal silicate includes a lithium silicate represented by the following Chemical Formula 1:
[Chemical Formula 1] LiₓSi_{y}O_{z}
wherein 1≤x≤6, 1≤y≤4, and 0<z≤7.

8. The negative electrode active material for a secondary battery of claim 1, wherein the hydrocarbon coating layer includes a straight-chain hydrocarbon organic acid having 8 or more carbon atoms or a derivative thereof, optionally wherein the straight-chain hydrocarbon organic acid is a fatty acid.

9. A method of producing a negative electrode active material for a secondary battery, the method comprising:
a) preparing a silicon oxide particle including a metal silicate; and
b) immersing the silicon oxide particle in an organic acid solution to prepare a hydrocarbon coating layer on the silicon oxide particle,
thereby preparing a negative electrode active material.

10. The method of producing a negative electrode active material for a secondary battery of claim 9, wherein the metal silicate of the process a) includes a metal silicate of any one of Li, Na, Mg, and K.

11. The method of producing a negative electrode active material for a secondary battery of claim 9, wherein the organic acid of the process b) includes a straight-chain hydrocarbon organic acid having 8 or more carbon atoms, optionally wherein the straight-chain hydrocarbon organic acid is a fatty acid.

12. The method of producing a negative electrode active material for a secondary battery of claim 9, wherein in the process b), the hydrocarbon coating layer is prepared by drying the organic acid-treated silicon oxide particle at 50 to 300°C.

13. The method of producing a negative electrode active material for a secondary battery of claim 9, wherein the process b) includes:
b1) immersing the silicon oxide particle in an acid solution including an inorganic acid or an organic acid having 6 or fewer carbon atoms; and
b2) immersing the product of the process b1) in an organic acid solution to prepare a hydrocarbon coating layer.

14. A negative electrode for a secondary battery comprising the negative electrode active material according to any one of claims 1 to 8.

15. A secondary battery comprising the negative electrode of claim 14.
